# EUROPEAN PATENT SPECIFICATION

(11) **EP 4 419 584 B1**
(45) Date of publication and mention of the grant of the patent: **02.12.2026**
(21) Application number: 22805812.9
(22) Date of filing: 17.10.2022
(51) Int. Cl.: C08J 3/20, C08K 5/098

(54) **SYNERGISTIC BETA-NUCLEATING BLENDS OF DICARBOXYLIC ACIDS WITH CALCIUM SALTS OF FULLY SATURATED FATTY ACIDS**
SYNERGISTISCHE BETA-NUKLEIERUNGSMISCHUNGEN VON DICARBONSÄUREN MIT CALCIUMSALZEN VON VOLLGESÄTTIGTEN FETTSÄUREN
MÉLANGES SYNERGIQUES BÊTA-NUCLÉANTS D'ACIDES DICARBOXYLIQUES AVEC DES SELS DE CALCIUM D'ACIDES GRAS ENTIÈREMENT SATURÉS

(30) Priority: 21.10.2021 EP 21203993
(43) Date of publication of application: 28.08.2024
(73) Proprietor: Borealis GmbH, 1020 Vienna (AT)
(72) Inventor: WANG, Jingbo, 4021 Linz (AT); GAHLEITNER, Markus, 4021 Linz (AT); BERNREITNER, Klaus, 4021 Linz (AT); PAN, Cheng, 4021 Linz (AT)
(74) Representative: Maiwald GmbH
(86) International application number: PCT/EP2022/078807
(87) International publication number: WO 2023/066851

(56) References cited:
- EP-A1- 1 939 167
- EP-A1- 2 799 478
- WO-A1-2017/076772

## Description

### Field of the Invention

The present invention is directed to a polypropylene composition obtainable by blending a propylene polymer with a combination of a dicarboxylic acid and a calcium salt of a fully saturated fatty acid, as well as to a process for producing the polypropylene composition, an article comprising the polypropylene composition, and a use of the combination of the dicarboxylic acid and the calcium salt of a fully saturated fatty acid for improving the impact strength of polypropylene compositions.

### Background to the Invention

When cooling from a melt, polypropylene typically crystalizes into the monoclinic α-crystalline form. In addition to this α-form, polypropylene may also crystalize in the hexagonal β-crystalline form and the orthorhombic γ-crystalline form. The metastable β-form is typically characterised by improved impact strength and crack growth retention, which is advantageous for a number of applications, such as in pipes and fittings, but also in profiles and ducts, automotive parts and other technical articles.

Typically, β-crystallisation is achieved through the addition of specific β-nucleating agents, such quinacridone pigments (e.g. in EP 0 177 961 A2), amide compounds (e.g. NJstar NU-100, N,N'-dicyclohexyl-2,6-naphthalene dicarboxamide) and, more recently, heteronuclear rare earth complexes such as WBG (as originally disclosed in Xiao W. et al, J. Appl. Polym. Sci., 111, 1076-1085 (2009)).

It is also known that calcium salts of certain simply dibasic acids (such as pimelic acid and suberic acid, as in WO 2008/074494 A1) can perform well as β-nucleating agents, though these salts can be very sensitive to traces of water and other difficult to control parameters.

WO 2017/076772 A1 provides a polypropylene composition comprising a β-nucleating agent combination of calcium salts of both cis-A4-tetrahydrophthalic acid and stearic acid.

EP 1 939 167 A1 relates to a polypropylene composition including mixtures of di-basic organic acid (eg. pimelic acid) and a calcium salt of fatty acids.

EP 2 799 478 A1 uses a calcium salt of tetrahydro phthalic anhydride as β-nucleating agent and calcium carbonate as adjuvant for polypropylene compositions.

Whilst a number of β-nucleating agents are known in the art, they are somewhat unreliable when used in industrial processes. Quinacridone pigments furthermore introduce colour to polymer compositions, which is often not desired, depending on the end use of the composition.

As such, further β-nucleating agents having high efficiency, reliability and avoiding pigmentation are desired in the field of polypropylene development.

### Summary of the Invention

The present invention is based on the observation that the β-nucleation behaviour of certain dicarboxylic acids can be greatly enhanced through a synergistic interaction with calcium salts of fully saturated fatty acids.

In a first aspect, the present invention is thus directed to a polypropylene composition (PC) obtainable by blending:
i) a propylene polymer (PP);
ii) a dicarboxylic acid according to formula (I) (CHA): 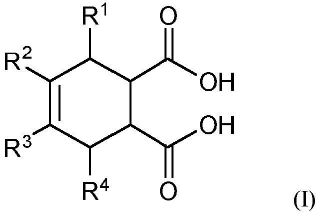 wherein R¹ to R⁴ are independently selected from the group consisting of hydrogen, alkyl, alkenyl, alkynyl, hydroxyalkyl, cycloalkyl, cycloalkenyl, aryl, substituted aryl, and halide and combinations thereof and optionally any adjacent R¹ to R⁴ are linked together to form a 5-membered or 6-membered ring;
iii) a calcium salt of a fully saturated fatty acid (CaFA).

In another aspect, the present invention is directed to a process for producing the polypropylene composition (PC) according to the invention, comprising the steps of:
a) providing the propylene polymer (PP);
b) providing the dicarboxylic acid according to formula (I) (CHA);
c) providing the calcium salt of a fully saturated fatty acid (CaFA);
d) blending and extruding the propylene polymer (PP), the dicarboxylic acid according to formula (I) (CHA) and the calcium salt of a fully saturated fatty acid (CaFA) at a temperature in the range from 120 to 250 °C in an extruder, preferably a twin-screw extruder, thereby generating the polypropylene composition (PC), preferably in pellet form.

In a further aspect, the present invention is also directed to an article, being either an extruded or a moulded article, comprising at least 90 wt.-%, more preferably at least 95 wt.-%, most preferably at least 98 wt.-% of the polypropylene composition (PC) according to the invention.

In a final aspect, the present invention is directed to a use of a dicarboxylic acid according to formula (I) (CHA) and a calcium salt of a fully saturated fatty acid (CaFA) for improving the Charpy notched impact strength of a polypropylene composition obtained by blending a propylene polymer with 0.10 to 1.00 wt.-% of the dicarboxylic acid according to formula (I) (CHA) and 0.10 to 1.00 wt.-% of the calcium salt of a fully saturated fatty acid (CaFA), wherein the Charpy notched impact strength of the polypropylene composition is in the range from 250 to 2000%, more preferably by 400 to 1500%, most preferably from 500 to 1000% higher than the Charpy notched impact strength of an equivalent polypropylene composition without either of the dicarboxylic acid according to formula (I) (CHA) or the calcium salt of a fully saturated fatty acid (CaFA), wherein the Charpy notched impact strength is determined at +23 °C according to ISO 179/1eA using 80x10x4 mm³ test bars injection moulded in line with ISO 19069-2.

### Definitions

Unless defined otherwise, all technical and scientific terms used herein have the same meaning as commonly understood by one of ordinary skill in the art to which the invention pertains. Although, any methods and materials similar or equivalent to those described herein can be used in practice for testing of the present invention, the preferred materials and methods are described herein. In describing and claiming the present invention, the following terminology will be used in accordance with the definitions set out below.

Unless clearly indicated otherwise, use of the terms "a," "an," and the like refers to one or more.

According to the present invention, the expression "propylene homopolymer" relates to a polypropylene that consists substantially, i.e. of at least 99.5 mol-%, more preferably of at least 99.8 mol-%, like of at least 99.9 mol-%, of propylene units. In another embodiment, only propylene units are detectable, i.e. only propylene has been polymerized.

A propylene random copolymer is a copolymer of propylene monomer units and comonomer units, preferably selected from ethylene and C4-C12 alpha-olefins, in which the comonomer units are distributed randomly over the polymeric chain. The propylene random copolymer can comprise comonomer units from one or more comonomers different in their amounts of carbon atoms. In the following amounts are given in mol-% unless it is stated otherwise. A propylene random copolymer must contain at least 50 mol-% propylene units.

Typical for propylene homopolymers and propylene random copolymers is the presence of only one glass transition temperature.

Fully saturated fatty acids, i.e. fatty acids without any carbon-carbon double bonds, are aliphatic monocarboxylic acids with a carbon chain length of 8 to 26, more preferably 10 to 22. Specifically preferred fully saturated fatty acids are lauric acid (C12), myristic acid (C14), palmitic acid (C16) and stearic acid (C18).

### Detailed Description

### The polypropylene composition (PC)

The present invention is directed to a polypropylene composition (PC) obtainable by blending:
i) a propylene polymer (PP);
ii) a dicarboxylic acid according to formula (I) (CHA): 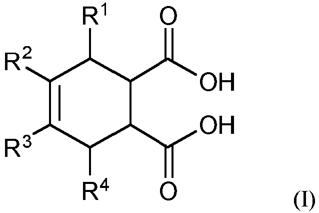 wherein R¹ to R⁴ are independently selected from the group consisting of hydrogen, alkyl, alkenyl, alkynyl, hydroxyalkyl, cycloalkyl, cycloalkenyl, aryl, substituted aryl, and halide and combinations thereof and optionally any adjacent R¹ to R⁴ are linked together to form a 5-membered or 6-membered ring;
iii) a calcium salt of a fully saturated fatty acid (CaFA).

Whilst, in the broadest sense, the polypropylene composition (PC) is obtainable by blending the propylene polymer (PP), the dicarboxylic acid according to formula (I) (CHA), and the calcium salt of a fully saturated fatty acid (CaFA), it is preferred that the polypropylene composition is obtained by blending the propylene polymer (PP), the dicarboxylic acid according to formula (I) (CHA), and the calcium salt of a fully saturated fatty acid (CaFA).

One essential component is the propylene polymer (PP).

The propylene polymer (PP) may be a propylene homopolymer (h-PP) or a propylene random copolymer (r-PP), preferably a propylene homopolymer (h-PP). It is believed that the combination of the inventive beta nucleation system (i.e. CHA plus CaFA) with propylene homopolymers give especially beneficial improvements in Charpy notched impact strength.

If the propylene polymer is a random copolymer (r-PP), the comonomer content is preferably in the range from 0.01 to 10.0 mol-%, more preferably 0.05 to 5.0 mol-%, most preferably in the range from 0.10 to 3.0 mol-%.

The comonomer of the propylene random copolymer (r-PP) is preferably selected from ethylene and C4 to C8 alpha olefins, more preferably is ethylene or 1-butene (C4).

If the propylene polymer (PP) is a propylene homopolymer (h-PP), it is preferred that the propylene homopolymer (h-PP) has an isotactic pentad regularity <mmmm> determined by ¹³C-NMR spectroscopy in the range of 90.0 to 99.9%, more preferably in the range from 91.0 to 99.5%, most preferably in the range from 92.5 to 98.5%.

It is further preferred that the propylene polymer (PP) has a melt flow rate (MFR₂), determined according to ISO 1133 at 230 °C at a load of 2.16 kg, in the range from 0.1 to 5.0 g/10 min, more preferably in the range from 0.1 to 2.0 g/10 min, most preferably in the range from 0.1 to 1.0 g/10 min.

Another essential component is the dicarboxylic acid according to formula (I) (CHA):

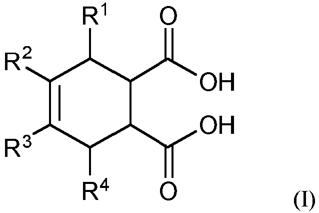

R¹ to R⁴ are independently selected from the group consisting of hydrogen, alkyl, alkenyl, alkynyl, hydroxyalkyl, cycloalkyl, cycloalkenyl, aryl, substituted aryl, and halide and combinations thereof and optionally any adjacent R¹ to R⁴ are linked together to form a 5-membered or 6-membered ring.

R¹ to R⁴ are preferably independently selected from the group consisting of hydrogen and C₁ to C₄ alkyl, more preferably from hydrogen, methyl and ethyl.

It is particularly preferred that each of R¹ to R⁴ are hydrogen, i.e. that the dicarboxylic acid is 4-cyclohexene-1,2-dicarboxylic acid, with the most preferred dicarboxylic acid being cis-4-cyclohexene-1,2-dicarboxylic acid.

The final essential component is the calcium salt of a fully saturated fatty acid.

Whilst the calcium salt of a fully saturated fatty acid (CaFA) may be a calcium salt of any fully saturated fatty acid, it is preferred that it is the calcium salt of a fully saturated C14 to C22 fatty acid, more preferably the calcium salt of a C16 to C20 fully saturated fatty acid, most preferably is calcium stearate.

The polypropylene composition (PC) is preferably obtainable by blending:
i) from 98.5 to 99.8 wt.-%, more preferably 99.0 to 99.7 wt.-%, most preferably 99.2 to 99.6 wt.-%, relative to the total weight of the polypropylene composition (PC), of the propylene polymer (PP);
ii) from 0.10 to 1.00 wt.-%, more preferably 0.15 to 0.70 wt.-%, most preferably 0.20 to 0.40 wt.-%, relative to the total weight of the polypropylene composition (PC), of the dicarboxylic acid according to formula (I) (CHA); and
iii) from 0.10 to 1.00 wt.-%, more preferably 0.15 to 0.70 wt.-%, most preferably 0.20 to 0.40 wt.-%, relative to the total weight of the polypropylene composition (PC), of the calcium salt of a fully saturated fatty acid (CaFA).

In one embodiment, the polypropylene composition (PC) is obtainable by blending:
i) from 99.0 to 99.7 wt.-%, relative to the total weight of the polypropylene composition (PC), of the propylene polymer (PP);
ii) from 0.15 to 0.70 wt.-%, relative to the total weight of the polypropylene composition (PC), of the dicarboxylic acid according to formula (I) (CHA); and
iii) from 0.15 to 0.70 wt.-%, relative to the total weight of the polypropylene composition (PC), of the calcium salt of a fully saturated fatty acid (CaFA).

In further preferred embodiment, the polypropylene composition (PC) is obtainable by blending:
i) from 99.2 to 99.6 wt.-%, relative to the total weight of the polypropylene composition (PC), of the propylene polymer (PP);
ii) from 0.20 to 0.40 wt.-%, relative to the total weight of the polypropylene composition (PC), of the dicarboxylic acid according to formula (I) (CHA); and
iii) from 0.20 to 0.40 wt.-%, relative to the total weight of the polypropylene composition (PC), of the calcium salt of a fully saturated fatty acid (CaFA).

It is preferred that the weight ratio of the calcium salt of a fully saturated fatty acid (CaFA) to the dicarboxylic acid according to formula (I) (CHA), [CaFA]/[CHA], is in the range from 0.90 to 2.00, more preferably in the range from 1.00 to 1.70, most preferably in the range from 1.05 to 1.40.

The polypropylene composition (PC) preferably has a melt flow rate (MFR₂), determined according to ISO 1133 at 230 °C at a load of 2.16 kg, in the range from 0.1 to 5.0 g/10 min, more preferably in the range from 0.1 to 2.0 g/10 min, most preferably in the range from 0.1 to 1.0 g/10 min.

The polypropylene composition (PC) preferably has a crystallisation temperature (T_{c}), determined by DSC analysis, in the range from 115.0 to 130.0 °C, more preferably in the range from 116.0 to 128.0 °C, most preferably in the range from 118.0 to 126.0 °C.

The polypropylene composition (PC) preferably has a flexural modulus, determined according to ISO 178 using 80x10x4 mm³ test bars injection moulded in line with ISO 19069-2, in the range from 1000 to 1500 MPa, more preferably in the range from 1100 to 1450 MPa, most preferably in the range from 1200 to 1400 MPa.

The polypropylene composition (PC) preferably has a Charpy notched impact strength (NIS), determined at +23 °C according to ISO 179/1eA using 80x10x4 mm³ test bars injection moulded in line with ISO 19069-2, in the range from 25.0 to 100.0 kJ/m², more preferably in the range from 30.0 to 90.0 kJ/m², most preferably in the range from 35.0 to 85.0 kJ/m².

It is particularly preferred that the polypropylene composition (PC) according to any one of the preceding claims, having a first melting temperature (Tₘ₁) in the range from 157 to 167 °C and a second melting temperature (Tₘ₂) in the range from 142 to 155 °C, wherein the ratio between the enthalpy of fusion associated with the first melting temperature (ΔHₘ₁) and the enthalpy of fusion associated with the second melting temperature (ΔHₘ₂), ([ΔHₘ₁]/[ ΔHₘ₂]) is in the range from 0.05 to 1.00, more preferably in the range from 0.05 to 0.80, most preferably in the range from 0.1 to 0.65,
wherein the first melting temperature (Tₘ₁), the second melting temperature (Tₘ₂), the enthalpy of fusion associated with the first melting temperature (ΔHₘ₁) and the enthalpy of fusion associated with the second melting temperature (ΔHₘ₂) are determined according to DSC analysis.

It is further preferred that the first melting temperature (Tₘ₁) is in the range from 160 to 167 °C, more preferably in the range from 163 to 166 °C.

It is also further preferred that the second melting temperature (Tₘ₂) is in the range from 145 to 153 °C, more preferably in the range from 148 to 152 °C.

### Article

In a further aspect, the present invention is directed to an article comprising the polypropylene composition according to the invention.

The article is either an extruded article or a moulded article. Preferably, the article is selected from the group consisting of pipes and fittings, profiles and ducts, automotive parts and technical articles.

The article comprises at least 90 wt.-%, more preferably at least 95 wt.-%, most preferably at least 98 wt.-% of the polypropylene composition (PC) as described above.

It is further preferred that the extruded or moulded article has a core beta-phase content (K_{β}), determined by wide angle x-ray scattering (WAXS), in the range from 50 to 99%, more preferably in the range from 55 to 95%, most preferably in the range from 60 to 90%.

Preferably, the extruded or moulded article has a core crystallinity index (Xc) in the range from 50 to 80%, more preferably in the range from 55 to 70%, most preferably in the range from 60 to 65%.

All preferable embodiments and fallback positions for the polypropylene composition (PC) described above apply mutatis mutandis to the polypropylene composition (PC) of the article.

### Process

In another aspect, the present invention is directed to a process for producing the polypropylene composition (PC) of the invention.

Said process comprises the steps of:
a) providing the propylene polymer (PP);
b) providing the dicarboxylic acid according to formula (I) (CHA);
c) providing the calcium salt of a fully saturated fatty acid (CaFA); and
d) blending and extruding the propylene polymer (PP), the dicarboxylic acid according to formula (I) (CHA) and the calcium salt of a fully saturated fatty acid (CaFA) at a temperature in the range from 120 to 250 °C in an extruder, preferably a twin-screw extruder, thereby generating the polypropylene composition (PC), preferably in pellet form.

In particular, it is preferred to use a conventional compounding or blending apparatus, e.g. a Banbury mixer, a 2-roll rubber mill, Buss-co-kneader or a twin-screw extruder. More preferably, mixing is accomplished in a co-rotating twin-screw extruder. The polymer materials recovered from the extruder are usually in the form of pellets.

It is particularly preferred that the polypropylene composition (PC) of the present invention is used for the production of moulded articles. It is thus preferred that the process further comprises, after step d) the step of:
e) moulding the polypropylene composition (PC) produced in step d) to form a moulded article,
wherein the moulding is preferably injection moulding.

Alternatively, the polypropylene composition (PC) of the present invention is used for the production of extruded articles. In such embodiments, step d) may involve:
d) blending and extruding the propylene polymer (PP), the dicarboxylic acid according to formula (I) (CHA) and the calcium salt of a fully saturated fatty acid (CaFA) at a temperature in the range from 120 to 250 °C in an extruder, preferably a twin-screw extruder, thereby generating an extruded article comprising the polypropylene composition (PC).

All preferable embodiments and fallback positions for the polypropylene composition (PC) and/or the article described above apply mutatis mutandis to the process for producing the polypropylene composition (PC) and/or the article.

### Use

In a final aspect, the present invention is directed to a use of a dicarboxylic acid according to formula (I) (CHA) and a calcium salt of a fully saturated fatty acid (CaFA) for improving the Charpy notched impact strength of a polypropylene composition obtained by blending a propylene polymer with 0.10 to 1.00 wt.-% of the dicarboxylic acid according to formula (I) (CHA) and 0.10 to 1.00 wt.-% of the calcium salt of a fully saturated fatty acid (CaFA).

The improvement of the Charpy notched impact strength is achieved when the Charpy notched impact strength of the polypropylene composition is in the range from 250 to 2000%, more preferably by 400 to 1500%, most preferably from 500 to 1000% higher than the Charpy notched impact strength of an equivalent polypropylene composition without either of the dicarboxylic acid according to formula (I) (CHA) or the calcium salt of a fully saturated fatty acid (CaFA), wherein the Charpy notched impact strength is determined at +23 °C according to ISO 179/1eA using 80x10x4 mm³ test bars injection moulded in line with ISO 19069-2.

In a preferred embodiment, the polypropylene composition of the use described above is the polypropylene composition (PC) as described above.

All preferable embodiments and fallback positions for the polypropylene composition (PC) described above apply mutatis mutandis to the polypropylene composition (PC) of this embodiment.

### EXAMPLES

### A. Measuring methods

The following definitions of terms and determination methods apply for the above general description of the invention including the claims as well as to the below examples unless otherwise defined.

### Quantification of microstructure by NMR spectroscopy

Quantitative nuclear-magnetic resonance (NMR) spectroscopy was used to quantify the isotacticity and regio-regularity of the propylene homopolymers.

Quantitative ¹³C{¹H} NMR spectra were recorded in the solution-state using a Bruker Advance III 400 NMR spectrometer operating at 400.15 and 100.62 MHz for ¹H and ¹³C respectively. All spectra were recorded using a ¹³C optimised 10 mm extended temperature probehead at 125°C using nitrogen gas for all pneumatics.

For propylene homopolymers approximately 200 mg of material was dissolved in *1,2-*tetrachloroethane-*d*₂ (TCE-*d*₂). To ensure a homogenous solution, after initial sample preparation in a heat block, the NMR tube was further heated in a rotatary oven for at least 1 hour. Upon insertion into the magnet the tube was spun at 10 Hz. This setup was chosen primarily for the high resolution needed for tacticity distribution quantification (Busico, V., Cipullo, R., Prog. Polym. Sci. 26 (2001) 443; Busico, V.; Cipullo, R., Monaco, G., Vacatello, M., Segre, A.L., Macromolecules 30 (1997) 6251). Standard single-pulse excitation was employed utilising the NOE and bi-level WALTZ 16 decoupling scheme (Zhou, Z., Kuemmerle, R., Qiu, X., Redwine, D., Cong, R., Taha, A., Baugh, D. Winniford, B., J. Mag. Reson. 187 (2007) 225; Busico, V., Carbonniere, P., Cipullo, R., Pellecchia, R., Severn, J., Talarico, G., Macromol. Rapid Commun. 2007, 28, 11289). A total of 8192 (8k) transients were acquired per spectra.

Quantitative ¹³C{¹H} NMR spectra were processed, integrated and relevant quantitative properties determined from the integrals using proprietary computer programs.

For propylene homopolymers all chemical shifts are internally referenced to the methyl isotactic pentad (mmmm) at 21.85 ppm.

Characteristic signals corresponding to regio defects (Resconi, L., Cavallo, L., Fait, A., Piemontesi, F., Chem. Rev. 2000, 100, 1253; Wang, W-J., Zhu, S., Macromolecules 33 (2000), 1157; Cheng, H. N., Macromolecules 17 (1984), 1950) or comonomer were observed.

The tacticity distribution was quantified through integration of the methyl region between 23.6-19.7 ppm correcting for any sites not related to the stereo sequences of interest (Busico, V., Cipullo, R., Prog. Polym. Sci. 26 (2001) 443; Busico, V., Cipullo, R., Monaco, G., Vacatello, M., Segre, A.L., Macromolecules 30 (1997) 6251).

Specifically the influence of regio-defects and comonomer on the quantification of the tacticity distribution was corrected for by subtraction of representative regio-defect and comonomer integrals from the specific integral regions of the stereo sequences.

The isotacticity was determined at the pentad level and reported as the percentage of isotactic pentad (mmmm) sequences with respect to all pentad sequences:$\left[mmmm\right] % = 100 ∗ \left(mmmm / sum of all pentads\right)$

The presence of 2,1 erythro regio-defects was indicated by the presence of the two methyl sites at 17.7 and 17.2 ppm and confirmed by other characteristic sites. Characteristic signals corresponding to other types of regio-defects were not observed (Resconi, L., Cavallo, L., Fait, A., Piemontesi, F., Chem. Rev. 2000, 100, 1253).

The amount of 2,1 erythro regio-defects was quantified using the average integral of the two characteristic methyl sites at 17.7 and 17.2 ppm:${P}_{21 e} = \left({I}_{e 6} + {I}_{e 8}\right) / 2$

The amount of 1,2 primary inserted propylene was quantified based on the methyl region with correction undertaken for sites included in this region not related to primary insertion and for primary insertion sites excluded from this region:${P}_{12} = {I}_{CH 3} + {P}_{12 e}$

The total amount of propylene was quantified as the sum of primary inserted propylene and all other present regio-defects:${P}_{total} = {P}_{12} + {P}_{21 e}$

The mole percent of 2,1 erythro regio-defects was quantified with respect to all propylene: [21e] mol-% = 100 * (P₂₁ₑ / Pₜₒₜₐₗ)

**MFR₂ (230 °C)** was measured according to ISO 1133 (230 °C, 2.16 kg load).

**DSC analysis, melting temperature (Tₘ) and heat of fusion (H_{f}), crystallization temperature (T_{c}) and heat of crystallization (H_{c}):** measured with a TA Instrument Q200 differential scanning calorimetry (DSC) on 5 to 7 mg samples. DSC is run according to ISO 11357 / part 3 /method C2 in a heat / cool / heat cycle with a scan rate of 10 °C/min in the temperature range of -30 to +225°C. Crystallization temperature (T_{c}) and heat of crystallization (H_{c}) are determined from the cooling step, while melting temperature (Tₘ) and heat of fusion (H_{f}) are determined from the second heating step.

**The Flexural Modulus** was determined according to ISO 178 method A (3-point bending test) on 80×10×4 mm³ specimens. Following the standard, a test speed of 2 mm/min and a span length of 16 times the thickness was used. The testing temperature was 23±2° C. Injection moulding was carried out according to ISO 19069-2 using a melt temperature of 230°C for all materials irrespective of material melt flow rate.

### Notched impact strength (NIS)

The Charpy notched impact strength (NIS) was measured according to ISO 179 1eA at +23°C or -20 °C, using injection moulded bar test specimens of 80x10x4 mm³ specimens. Injection moulding was carried out according to ISO 19069-2 using a melt temperature of 230°C for all materials irrespective of material melt flow rate.

### Wide angle X-ray Scattering measurement (WAXS)

The measurement of wide-angle X-ray scattering (WAXS) of the samples was conducted by a Bruker D8 Discover apparatus. The diffractometer was equipped with an X-ray tube with a copper target operating at 30 kV and 20mA and a GADDS 2-D detector. A point collimation (0.5 mm) was used to direct the beam onto the surface. The measurement was done in reflection geometry, and 28 angle in the range from 10° to 32.5° were measured. Data were collected for 300 s. Intensity vs. 2-theta curve was acquired with the same measurement parameters on an amorphous polypropylene sample, which was prepared by solvent extraction. An amorphous halo was obtained by smoothing the curve. The amorphous halo has been subtracted from the measured intensity vs. 2-theta curve to result in the crystalline curve.

The crystallinity index Xc can be defined by the area under the crystalline curve and the original spectrum using Challa, Hermans and Weidinger method [Challa F, Hermans PH, Weidinger A, Makromol. Chem. 56, 169 (1962)] as: $Xc = \frac{area under crystalline curve}{area under original spectrum} \times 100$

The amount of β-form of the polypropylene within the crystalline phase K_{β} was calculated using Jones method [Turner-Jones A, Aizlewood JM, Beckett DR, Makromol. Chem. 75, 134 (1974)] according to the following equation: ${K}_{β} = \frac{{I}^{β} \left(300\right)}{{I}^{α} \left(110\right) + {I}^{α} \left(040\right) + {I}^{α} \left(130\right) + {I}^{β} \left(300\right)}$ where, I^{β}(300) is the intensity of β(300) peak, I^{α} (1 10) is the intensity of α(1 10) peak, I^{α} (040) is the intensity of α(040) peak and I^{α} (130) is the intensity of α(130) peak obtained after subtracting the amorphous halo.

The amount of γ-form of isotactic polypropylene (iPP) within the crystalline phase K_{γ} was calculated using the method developed by Pae [Pae KD, J. Polym. Sci. , Part A, 6, 657 (1968)] as: ${K}_{γ} = \frac{{I}^{γ} \left(117\right)}{{I}^{α} \left(130\right) + {I}^{γ} \left(117\right)}$ where, I^{α} (130) is the intensity of α(130) peak and I^{γ} (117) is the intensity of y(117) peak obtained after subtracting a base line joining the base of these peaks.

Quantification of three-phase crystalline system has been carried out following the procedure explained in Obadal M, Cermak R, Stoklasa K, Macromol. Rapid Commun. 26, 1253 (2005). For three-phase crystalline systems the following equations have been used to determine K_{α} (amount of α-phase), K_{β} (amount of β-phase) and Kγ (amount of γ-phase): ${K}_{β} = \frac{{I}^{β} \left(300\right)}{{I}^{α} \left(110\right) + {I}^{α} \left(040\right) + {I}^{α} \left(130\right) + {I}^{β} \left(300\right) + {I}^{γ} \left(117\right)}$ ${K}_{α + γ} = 1 - {K}_{β}$ ${K}_{γ} = G \times {K}_{α + γ}$ and ${K}_{α} = 1 - {K}_{β} - {K}_{γ}$

Measurements were performed on the skin section (i.e. the outer 100 µm) and the core section (i.e. the central part) of 80×10×4 mm³ specimens as injection molded for the mechanical tests.

### B. Experimental

The inventive and comparative examples were compounded in a TSE16 twin screw extruder with a melt temperature of 210 °C and a throughput rate of 1.5 kg/h, according to the recipes given in Table 1:

**Table 1: Recipes of the inventive and comparative examples**

| | | **IE1** | **CE1** | **CE2** | **CE3** | **CE4** |
|---|---|---|---|---|---|---|
| h-PP1 | [wt%] | 99.30 | 99.80 | 99.55 | - | - |
| h-PP2 | [wt%] | - | - | - | 99.59 | 99.80 |
| AO | [wt%] | 0.15 | 0.15 | 0.15 | 0.15 | 0.15 |
| SHT | [wt%] | - | 0.05 | 0.05 | - | - |
| CHA | [wt%] | 0.25 | - | 0.25 | - | - |
| CaSt | [wt%] | 0.30 | - | - | 0.05 | 0.05 |
| WBG | [wt%] | - | - | - | 0.21 | - |

| | |
|---|---|
| h-PP1 | a propylene homopolymer having an MFR₂ of 0.7 g/10 min and an isotactic pentad concentration of 93.1%, commercially available from Borealis AG under the trade name HA001-A. |
| h-PP2 | a propylene homopolymer having an MFR₂ of 0.3 g/10 min and an isotactic pentad concentration of 95.2%, commercially available from Borealis AG under the trade name B-Powder-10. |
| AO | Irganox B215, a synergistic 2:1 blend of antioxidants Irgafos 168 (tris(2,4-ditert-butylphenyl)phosphite, CAS No: 31570-04-4) and Irganox 1010 (pentaerythritol tetrakis[3-[3,5-di-tert-butyl-4-hydroxyphenyl]propionate], CAS No: 6683-19-8), available from BASF SE. |
| SHT | synthetic hydrotalcite, available from Kisuma Chemicals under the trade name DHT-4A. |
| CHA | cis-4-cyclohexene-1,2-dicarboxylic acid (CAS No: 2305-26-2), commercially available from SigmaAldrich. |
| CaSt | calcium stearate (CAS No: 1592-23-0), commercially available from Bärlocher GmbH under the trade name CEASIT-1. |
| WBG | a heteronuclear dimetal complex of lanthanum and calcium, commercially available from Guangdong Winner Functional Materials Co., China, under the trade name WBG. |

**Table 2: Properties of the inventive and comparative examples**

| | | **IE1** | **CE1** | **CE2** | **CE3** | **CE4** |
|---|---|---|---|---|---|---|
| MFR₂ | [g/10min] | 0.79 | 0.63 | 0.75 | 0.25 | 0.3 |
| Flex Mod | [MPa] | 1285 | 1404 | 1539 | 1490 | 1540 |
| NIS | [kJ/m²] | 45.22 | 5.37 | 5.52 | 27.0 | 7.93 |
| ΔNIS | [%] | 742 | n/a | 3 | 240 | n/a |

| DSC | | | | | | |
|---|---|---|---|---|---|---|
| Tc | [°C] | 123 | 117 | 117 | 124 | 120 |
| Tₘ₁ | [°C] | 165 | 163 | 163 | 169 | 165 |
| Hₘ₁ | [J/g] | 32 | 103 | 97 | 19.1 | 98 |
| Tₘ₂ | [°C] | 152 | n.d. | n.d. | 153 | n.d. |
| Hₘ₂ | [J/g] | 66 | n.d. | n.d. | 77.7 | n.d. |
| [ΔHₘ₁]/[ ΔHₘ₂] | [-] | 0.48 | n/a | n/a | 0.25 | n/a |
| [ΔHₘ₂]/( [ΔHₘ₁]+[ ΔHₘ₂]) | [-] | 0.67 | n/a | n/a | 0.80 | n/a |

| **WAXS B-bar** | | | | | | |
|---|---|---|---|---|---|---|
| Xc(core) | [%] | 62.8 | 64.9 | 66.7 | n.m. | n.m. |
| K_{β}(core) | [%] | 84 | 9 | 2 | 89 | 0 |
| Xc(skin) | [%] | 59.5 | 63.2 | 64.9 | n.m. | n.m. |
| K_{β}(skin) | [%] | 58 | 27 | 22 | n.m. | n.m. |

| | | | | | | |
|---|---|---|---|---|---|---|
| n/a - not applicable, n.d. - not detectable (below the detection limit), n.m. - not measured. | | | | | | |

As can be seen from Table 2, the combination of calcium stearate and the CHA act synergistically to affect β-nucleation in IE1. The use of CHA alone has very little effect, as demonstrated by CE2, with no melting temperature associated with the beta phase observed by DSC analysis, and an improvement of the Charpy notched impact strength of just 3% (relative to CE1), compared to the 742% improvement observed for IE1 (again relative to CE1).

This 742% improvement is notable, especially when compared to the effects observed when using other well known β-nucleating agents, such as WBG. By comparing CE3 to CE4, we can see that incorporation of WBG in CE3 leads to a Charpy NIS improvement of 240% (relative to CE4). Whilst this is a significant improvement, the performance of the inventive combination of CHA and calcium fully saturated fatty acid salt is clearly superior.

## Claims

1. A polypropylene composition (PC) obtainable by blending:
i) a propylene polymer (PP);
ii) a dicarboxylic acid according to formula (I) (CHA): 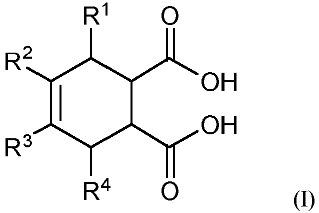 wherein R¹ to R⁴ are independently selected from the group consisting of hydrogen, alkyl, alkenyl, alkynyl, hydroxyalkyl, cycloalkyl, cycloalkenyl, aryl, substituted aryl, and halide and combinations thereof and optionally any adjacent R¹ to R⁴ are linked together to form a 5-membered or 6-membered ring;
iii) a calcium salt of a fully saturated fatty acid (CaFA).

2. The polypropylene composition (PC) according to claim 1, wherein R¹ to R⁴ are independently selected from the group consisting of hydrogen and C₁ to C₄ alkyl, more preferably R¹ to R⁴ are each hydrogen.

3. The polypropylene composition (PC) according to claim 1 or claim 2, wherein the calcium salt of a fully saturated fatty acid (CaFA) is calcium stearate.

4. The polypropylene composition (PC) according to any one of the preceding claims, obtainable by blending:
i) from 98.5 to 99.8 wt.-%, more preferably 99.0 to 99.7 wt.-%, most preferably 99.3 to 99.6 wt.-%, relative to the total weight of the polypropylene composition (PC), of the propylene polymer (PP);
ii) from 0.10 to 1.00 wt.-%, more preferably 0.15 to 0.70 wt.-%, most preferably 0.20 to 0.40 wt.-%, relative to the total weight of the polypropylene composition (PC), of the dicarboxylic acid according to formula (I) (CHA); and
iii) from 0.10 to 1.00 wt.-%, more preferably 0.15 to 0.70 wt.-%, most preferably 0.20 to 0.40 wt.-%, relative to the total weight of the polypropylene composition (PC), of the calcium salt of a fully saturated fatty acid (CaFA).

5. The polypropylene composition (PC) according to any one of the preceding claims, wherein the weight ratio of the calcium salt of a fully saturated fatty acid (CaFA) to the dicarboxylic acid according to formula (I) (CHA), [CaFA]/[CHA], is in the range from 0.90 to 2.00, more preferably in the range from 1.00 to 1.70, most preferably in the range from 1.05 to 1.40.

6. The polypropylene composition (PC) according to any one of the preceding claims, wherein the propylene polymer (PP) has a melt flow rate (MFR₂), determined according to ISO 1133 at 230 °C at a load of 2.16 kg, in the range from 0.1 to 5.0 g/10 min, more preferably in the range from 0.1 to 2.0 g/10 min, most preferably in the range from 0.1 to 1.0 g/10 min, and/or
an isotactic pentad regularity <mmmm> determined by ¹³C-NMR spectroscopy in the range of 90.0 to 99.9%, more preferably in the range from 91.0 to 99.5%, most preferably in the range from 92.5 to 98.5%.

7. The polypropylene composition (PC) according to any one of the preceding claims, having a melt flow rate (MFR₂), determined according to ISO 1133 at 230 °C at a load of 2.16 kg, in the range from 0.1 to 5.0 g/10 min, more preferably in the range from 0.1 to 2.0 g/10 min, most preferably in the range from 0.1 to 1.0 g/10 min.

8. The polypropylene composition (PC) according to any one of the preceding claims, having a crystallisation temperature (T_{c}), as determined by DSC analysis, in the range from 115.0 to 125.0 °C, more preferably in the range from 116.0 to 128.0 °C, most preferably in the range from 118.0 to 126.0 °C.

9. The polypropylene composition (PC) according to any one of the preceding claims, wherein the polypropylene composition (PC) has either of, preferably both of, the following properties:
a) a flexural modulus, determined according to ISO 178 using 80x10x4 mm³ test bars injection moulded in line with ISO 19069-2, in the range from 1000 to 1500 MPa, more preferably in the range from 1100 to 1450 MPa, most preferably in the range from 1200 to 1400 MPa; and
b) a Charpy notched impact strength, determined at +23 °C according to ISO 179/1eA using 80x10x4 mm³ test bars injection moulded in line with ISO 19069-2, in the range from 25.0 to 100.0 kJ/m², more preferably in the range from 30.0 to 90.0 kJ/m², most preferably in the range from 35.0 to 85.0 kJ/m².

10. The polypropylene composition (PC) according to any one of the preceding claims, having a first melting temperature (Tₘ₁) in the range from 157 to 167 °C and a second melting temperature (Tₘ₂) in the range from 142 to 155 °C, wherein the ratio between the enthalpy of fusion associated with the first melting temperature (ΔHₘ₁) and the enthalpy of fusion associated with the second melting temperature (ΔHₘ₂), ([ΔHₘ₁]/[ ΔHₘ₂]) is in the range from 0.05 to 1.00, more preferably in the range from 0.05 to 0.80, most preferably in the range from 0.1 to 0.65,
wherein the first melting temperature (Tₘ₁), the second melting temperature (Tₘ₂), the enthalpy of fusion associated with the first melting temperature (ΔHₘ₁) and the enthalpy of fusion associated with the second melting temperature (ΔHₘ₂) are determined according to DSC analysis.

11. A process for producing the polypropylene composition (PC) according to any one of the preceding claims, comprising the steps of:
a) providing a propylene polymer (PP) as defined in claim 1 or 6;
b) providing a dicarboxylic acid according to formula (I) (CHA) as defined in claims 1 or 2;
c) providing a calcium salt of a fully saturated fatty acid (CaFA) as defined in claims 1 or 3; and
d) blending and extruding the propylene polymer (PP), the dicarboxylic acid according to formula (I) (CHA) and the calcium salt of a fully saturated fatty acid (CaFA) at a temperature in the range from 120 to 250 °C in an extruder, preferably a twin-screw extruder, thereby generating the polypropylene composition (PC), preferably in pellet form.

12. An article, being either an extruded or a moulded article, comprising at least 90 wt.-%, more preferably at least 95 wt.-%, most preferably at least 98 wt.-% of the polypropylene composition (PC) according to any one of the preceding claims.

13. The extruded or moulded article according to claim 12, having a core beta-phase content (K_{β}), determined by wide angle x-ray scattering (WAXS), in the range from 50 to 99%, more preferably in the range from 55 to 95%, most preferably in the range from 60 to 90%.

14. A use of a dicarboxylic acid according to formula (I) (CHA) and a calcium salt of a fully saturated fatty acid (CaFA) for improving the Charpy notched impact strength of a polypropylene composition obtained by blending a propylene polymer with 0.10 to 1.00 wt.-% of the dicarboxylic acid according to formula (I) (CHA) and 0.10 to 1.00 wt.-% of the calcium salt of a fully saturated fatty acid (CaFA), wherein the Charpy notched impact strength of the polypropylene composition is in the range from 250 to 2000%, more preferably by 400 to 1500%, most preferably from 500 to 1000% higher than the Charpy notched impact strength of an equivalent polypropylene composition without either of the dicarboxylic acid according to formula (I) (CHA) or the calcium salt of a fully saturated fatty acid (CaFA), wherein the Charpy notched impact strength is determined at +23 °C according to ISO 179/1eA using 80x10x4 mm³ test bars injection moulded in line with ISO 19069-2.

15. The use according to claim 14, wherein the polypropylene composition is a polypropylene composition (PC) according to any one of claims 1 to 12.

## Patentansprüche

1. Eine Polypropylen-Zusammensetzung (PC), erhältlich durch Mischen von:
i) einem Propylenpolymer (PP);
ii) einer Dicarbonsäure gemäß Formel (I) (CHA): 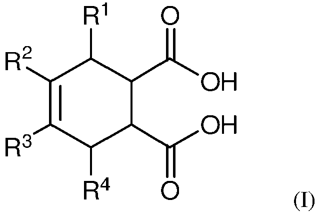 wobei R₁ bis R₄ unabhängig voneinander aus der Gruppe ausgewählt sind, bestehend aus Wasserstoff, Alkyl, Alkenyl, Alkinyl, Hydroxyalkyl, Cycloalkyl, Cycloalkenyl, Aryl, substituiertem Aryl und Halogen sowie Kombinationen davon, und wobei gegebenenfalls beliebige benachbarte R₁ bis R₄ miteinander verbunden sind, um einen 5-gliedrigen oder 6-gliedrigen Ring zu bilden;
iii) einem Calciumsalz einer vollständig gesättigten Fettsäure (CaFA).

2. Polypropylen-Zusammensetzung (PC) nach Anspruch 1, wobei R₁ bis R₄ unabhängig voneinander aus der Gruppe ausgewählt sind, die aus Wasserstoff und C₁- bis C₄-Alkyl besteht, wobei bevorzugter R₁ bis R₄ jeweils Wasserstoff sind.

3. Polypropylen-Zusammensetzung (PC) nach Anspruch 1 oder Anspruch 2, wobei das Calciumsalz einer vollständig gesättigten Fettsäure (CaFA) Calciumstearat ist.

4. Polypropylen-Zusammensetzung (PC) nach einem der vorstehenden Ansprüche, erhältlich durch Mischen von:
i) von 98,5 bis 99,8 Gew.-%, bevorzugter 99,0 bis 99,7 Gew.-%, am meisten bevorzugt 99,3 bis 99,6 Gew.-%, bezogen auf das Gesamtgewicht der Polypropylen-Zusammensetzung (PC), des Propylenpolymers (PP);
ii) von 0,10 bis 1,00 Gew.-%, bevorzugter 0,15 bis 0,70 Gew.-%, am meisten bevorzugt 0,20 bis 0,40 Gew.-%, bezogen auf das Gesamtgewicht der Polypropylen-Zusammensetzung (PC), der Dicarbonsäure gemäß Formel (I) (CHA); und
iii) von 0,10 bis 1,00 Gew.-%, bevorzugter 0,15 bis 0,70 Gew.-%, am meisten bevorzugt 0,20 bis 0,40 Gew.-%, bezogen auf das Gesamtgewicht der Polypropylen-Zusammensetzung (PC), des Calciumsalzes einer vollständig gesättigten Fettsäure (CaFA).

5. Polypropylen-Zusammensetzung (PC) nach einem der vorstehenden Ansprüche, wobei das Gewichtsverhältnis des Calciumsalzes einer vollständig gesättigten Fettsäure (CaFA) zur Dicarbonsäure gemäß Formel (I) (CHA), [CaFA]/[CHA], im Bereich von 0,90 bis 2,00, bevorzugter im Bereich von 1,00 bis 1,70, am meisten bevorzugt im Bereich von 1,05 bis 1,40 liegt.

6. Polypropylen-Zusammensetzung (PC) nach einem der vorstehenden Ansprüche, wobei das Propylenpolymer (PP) eine Schmelzflussrate (MFR₂), bestimmt gemäß ISO 1133 bei 230 °C unter einer Last von 2,16 kg, im Bereich von 0,1 bis 5,0 g/10 min, bevorzugter im Bereich von 0,1 bis 2,0 g/10 min, am meisten bevorzugt im Bereich von 0,1 bis 1,0 g/10 min, und/oder eine durch ¹³C-NMR-Spektroskopie bestimmte isotaktische Pentaden-Regelmäßigkeit <mmmm> im Bereich von 90,0 bis 99,9 %, bevorzugter im Bereich von 91,0 bis 99,5 %, am meisten bevorzugt im Bereich von 92,5 bis 98,5 % aufweist.

7. Polypropylen-Zusammensetzung (PC) nach einem der vorstehenden Ansprüche, die eine Schmelzflussrate (MFR₂), bestimmt gemäß ISO 1133 bei 230 °C unter einer Last von 2,16 kg, im Bereich von 0,1 bis 5,0 g/10 min, bevorzugter im Bereich von 0,1 bis 2,0 g/10 min, am meisten bevorzugt im Bereich von 0,1 bis 1,0 g/10 min aufweist.

8. Polypropylen-Zusammensetzung (PC) nach einem der vorstehenden Ansprüche, die eine Kristallisationstemperatur (T_{c}), bestimmt durch DSC-Analyse, im Bereich von 115,0 bis 125,0 °C, bevorzugter im Bereich von 116,0 bis 128,0 °C, am meisten bevorzugt im Bereich von 118,0 bis 126,0 °C aufweist.

9. Polypropylen-Zusammensetzung (PC) nach einem der vorstehenden Ansprüche, wobei die Polypropylen-Zusammensetzung (PC) eine der folgenden Eigenschaften, vorzugsweise beide, aufweist:
a) einen Biegemodul, bestimmt gemäß ISO 178 unter Verwendung von 80 × 10 × 4 mm³ Prüfstäben, die gemäß ISO 19069-2 spritzgegossen wurden, im Bereich von 1000 bis 1500 MPa, bevorzugter im Bereich von 1100 bis 1450 MPa, am meisten bevorzugt im Bereich von 1200 bis 1400 MPa; und
b) eine Charpy-Kerbschlagzähigkeit, bestimmt bei +23 °C gemäß ISO 179/1eA unter Verwendung von 80 × 10 × 4 mm³ Prüfstäben, die gemäß ISO 19069-2 spritzgegossen wurden, im Bereich von 25,0 bis 100,0 kJ/m², bevorzugter im Bereich von 30,0 bis 90,0 kJ/m², am meisten bevorzugt im Bereich von 35,0 bis 85,0 kJ/m².

10. Polypropylen-Zusammensetzung (PC) nach einem der vorstehenden Ansprüche, die eine erste Schmelztemperatur (Tₘ₁) im Bereich von 157 bis 167 °C und eine zweite Schmelztemperatur (Tₘ₂) im Bereich von 142 bis 155 °C aufweist, wobei das Verhältnis zwischen der der ersten Schmelztemperatur zugeordneten Schmelzenthalpie (ΔHₘ₁) und der der zweiten Schmelztemperatur zugeordneten Schmelzenthalpie (ΔHₘ₂), ([ΔHₘ₁]/[ΔHₘ₂]), im Bereich von 0,05 bis 1,00, bevorzugter im Bereich von 0,05 bis 0,80, am meisten bevorzugt im Bereich von 0,1 bis 0,65 liegt,
wobei die erste Schmelztemperatur (Tₘ₁), die zweite Schmelztemperatur (Tₘ₂), die der ersten Schmelztemperatur zugeordnete Schmelzenthalpie (ΔHₘ₁) und die der zweiten Schmelztemperatur zugeordnete Schmelzenthalpie (ΔHₘ₂) mittels DSC-Analyse bestimmt werden.

11. Verfahren zur Herstellung der Polypropylen-Zusammensetzung (PC) nach einem der vorstehenden Ansprüche, umfassend die folgenden Schritte:
a) Bereitstellen eines Propylenpolymers (PP), wie in Anspruch 1 oder 6 definiert;
b) Bereitstellen einer Dicarbonsäure gemäß Formel (I) (CHA), wie in Anspruch 1 oder 2 definiert;
c) Bereitstellen eines Calciumsalzes einer vollständig gesättigten Fettsäure (CaFA), wie in Anspruch 1 oder 3 definiert; und
d) Mischen und Extrudieren des Propylenpolymers (PP), der Dicarbonsäure gemäß Formel (I) (CHA) und des Calciumsalzes einer vollständig gesättigten Fettsäure (CaFA) bei einer Temperatur im Bereich von 120 bis 250 °C in einem Extruder, vorzugsweise einem Doppelschneckenextruder, wodurch die Polypropylen-Zusammensetzung (PC), vorzugsweise in Pelletform, erzeugt wird.

12. Gegenstand, bei dem es sich entweder um einen extrudierten oder einen geformten Gegenstand handelt, umfassend mindestens 90 Gew.-%, bevorzugter mindestens 95 Gew.-%, am meisten bevorzugt mindestens 98 Gew.-% der Polypropylen-Zusammensetzung (PC) nach einem der vorstehenden Ansprüche.

13. Extrudierter oder geformter Gegenstand nach Anspruch 12, der einen durch Weitwinkel-Röntgenstreuung (WAXS) bestimmten Beta-Phasen-Gehalt im Kern (K_{β}) im Bereich von 50 bis 99 %, bevorzugter im Bereich von 55 bis 95 %, am meisten bevorzugt im Bereich von 60 bis 90 % aufweist.

14. Verwendung einer Dicarbonsäure gemäß Formel (I) (CHA) und eines Calciumsalzes einer vollständig gesättigten Fettsäure (CaFA) zur Verbesserung der Charpy-Kerbschlagzähigkeit einer Polypropylen-Zusammensetzung, die durch Mischen eines Propylenpolymers mit 0,10 bis 1,00 Gew.-% der Dicarbonsäure gemäß Formel (I) (CHA) und 0,10 bis 1,00 Gew.-% des Calciumsalzes einer vollständig gesättigten Fettsäure (CaFA) erhalten wird, wobei die Charpy-Kerbschlagzähigkeit der Polypropylen-Zusammensetzung im Bereich von 250 bis 2000 %, bevorzugter im Bereich von 400 bis 1500 %, am meisten bevorzugt im Bereich von 500 bis 1000 % höher ist als die Charpy-Kerbschlagzähigkeit einer äquivalenten Polypropylen-Zusammensetzung, die weder die Dicarbonsäure gemäß Formel (I) (CHA) noch das Calciumsalz einer vollständig gesättigten Fettsäure (CaFA) enthält, wobei die Charpy-Kerbschlagzähigkeit bei +23 °C gemäß ISO 179/1eA unter Verwendung von 80 × 10 × 4 mm³ Prüfstäben, die gemäß ISO 19069-2 spritzgegossen wurden, bestimmt wird.

15. Verwendung nach Anspruch 14, wobei die Polypropylen-Zusammensetzung eine Polypropylen-Zusammensetzung (PC) nach einem der Ansprüche 1 bis 12 ist.

## Revendications

1. Composition de polypropylène (PC) pouvant être obtenue par mélange :
i) d'un polymère de propylène (PP) ;
ii) d'un acide dicarboxylique selon la formule (I) (CHA) : 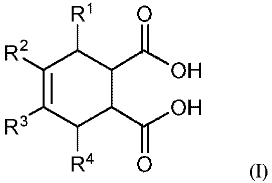 dans laquelle R¹ à R⁴ sont choisis indépendamment dans le groupe constitué d'hydrogène, alkyle, alcényle, alcynyle, hydroxyalkyle, cycloalkyle, cycloalcényle, aryle, aryle substitué et halogénure et de leurs combinaisons et optionnellement tous R¹ à R⁴ adjacents sont liés ensemble pour former un cycle à 5 ou 6 éléments ;
iii) d'un sel de calcium d'un acide gras entièrement saturé (CaFA).

2. Composition de polypropylène (PC) selon la revendication 1, dans laquelle R¹ à R⁴ sont choisis indépendamment dans le groupe constitué d'hydrogène et d'alkyle en C₁ à C₄, de préférence R¹ à R⁴ sont chacun hydrogène.

3. Composition de polypropylène (PC) selon la revendication 1 ou la revendication 2, dans laquelle le sel de calcium d'un acide gras entièrement saturé (CaFA) est du stéarate de calcium.

4. Composition de polypropylène (PC) selon l'une quelconque des revendications précédentes, obtenue par mélange :
i) de 98,5 à 99,8 % en poids, de préférence de 99,0 à 99,7 % en poids, mieux encore de 99,3 à 99,6 % en poids, par rapport au poids total de la composition de polypropylène (PC), du polymère de propylène (PP) ;
ii) de 0,10 à 1,00 % en poids, de préférence de 0,15 à 0,70 % en poids, mieux encore de 0,20 à 0,40 % en poids, par rapport au poids total de la composition de polypropylène (PC), de l'acide dicarboxylique selon la formule (I) (CHA) ; et
iii) de 0,10 à 1,00 % en poids, de préférence de 0,15 à 0,70 % en poids, mieux encore de 0,20 à 0,40 % en poids, par rapport au poids total de la composition de polypropylène (PC), du sel de calcium d'un acide gras entièrement saturé (CaFA).

5. Composition de polypropylène (PC) selon l'une quelconque des revendications précédentes, dans laquelle le rapport pondéral du sel de calcium d'un acide gras entièrement saturé (CaFA) à l'acide dicarboxylique selon la formule (I) (CHA), [CaFA]/[CHA], est dans la plage de 0,90 à 2,00, de préférence dans la plage de 1,00 à 1,70, mieux encore dans la plage de 1,05 à 1,40.

6. Composition de polypropylène (PC) selon l'une des revendications précédentes, dans laquelle le polymère de propylène (PP) présente un indice de fluidité à chaud (MFR₂), déterminé selon l'ISO 1133 à 230 °C à une charge de 2,16 kg, dans la plage de 0,1 à 5,0 g/10 min, de préférence dans la plage de 0,1 à 2,0 g/10 min, mieux encore dans la plage de 0,1 à 1,0 g/10 min, et/ou
une régularité de pentade isotactique <mmmm> déterminée par spectroscopie ¹³C-NMR dans la plage de 90,0 à 99,9 %, de préférence dans la plage de 91,0 à 99,5 %, mieux encore dans la plage de 92,5 à 98,5 %.

7. Composition de polypropylène (PC) selon l'une quelconque des revendications précédentes, ayant un indice de fluidité à chaud (MFR₂), déterminé selon l'ISO 1133 à 230 °C à une charge de 2,16 kg, dans la plage de 0,1 à 5,0 g/10 min, de préférence dans la plage de 0,1 à 2,0 g/10 min, mieux encore dans la plage de 0,1 à 1,0 g/10 min.

8. Composition de polypropylène (PC) selon l'une quelconque des revendications précédentes, ayant une température de cristallisation (T_{c}), déterminée par analyse DSC, dans la plage de 115,0 à 125,0 °C, de préférence dans la plage de 116,0 à 128,0 °C, mieux encore dans la plage de 118,0 à 126,0 °C.

9. Composition de polypropylène (PC) selon l'une quelconque des revendications précédentes, la composition de polypropylène (PC) possédant l'une des propriétés suivantes, de préférence les deux :
a) un module de flexion, déterminé selon l'ISO 178 sur des barres d'essai de 80x10x4 mm³ moulées par injection conformément à l'ISO 19069-2, dans la plage de 1 000 à 1 500 MPa, de préférence dans la plage de 1 100 à 1 450 MPa, mieux encore dans la plage de 1 200 à 1 400 MPa ; et
b) une résistance au choc Charpy sur éprouvette entaillée, déterminée à +23 °C selon l'ISO 179/1eA à l'aide de barres d'essai 80x10x4 mm³ moulées par injection conformément à l'ISO 19069-2, dans la plage de 25,0 à 100,0 kJ/m², de préférence dans la plage de 30,0 à 90,0 kJ/m², mieux encore dans la plage de 35,0 à 85,0 kJ/m².

10. Composition de polypropylène (PC) selon l'une quelconque des revendications précédentes, ayant une première température de fusion (Tₘ₁) dans la plage de 157 à 167 °C et une seconde température de fusion (Tₘ₂) dans la plage de 142 à 155 °C, dans laquelle le rapport entre l'enthalpie de fusion associée à la première température de fusion (ΔHₘ₁) et l'enthalpie de fusion associée à la seconde température de fusion (ΔHₘ₂), ([ΔHₘ₁]/[ ΔHₘ₂]) est dans la plage de 0,05 à 1,00, de préférence dans la plage de 0,05 à 0,80, mieux encore dans la plage de 0,1 à 0,65,
dans laquelle la première température de fusion (Tₘ₁), la seconde température de fusion (Tₘ₂) l'enthalpie de fusion associée à la première température de fusion (ΔHₘ₁) et l'enthalpie de fusion associée à la seconde température de fusion (ΔHₘ₂) sont déterminées selon l'analyse DSC.

11. Procédé de production de la composition de polypropylène (PC) selon l'une quelconque des revendications précédentes, comprenant les étapes de :
a) fourniture d'un polymère de propylène (PP) selon la revendication 1 ou 6 ;
b) fourniture d'un acide dicarboxylique selon la formule (I) (CHA) selon les revendications 1 ou 2 ;
c) fourniture d'un sel de calcium d'un acide gras entièrement saturé (CaFA) selon les revendications 1 ou 3 ; et
d) mélange et extrusion du polymère de propylène (PP), de l'acide dicarboxylique selon la formule (I) (CHA) et du sel de calcium d'un acide gras entièrement saturé (CaFA) à une température dans la plage de 120 à 250 °C dans une extrudeuse, de préférence une extrudeuse à double vis, générant ainsi la composition de polypropylène (PC), de préférence sous forme de granulés.

12. Article, qui est un article extrudé ou moulé, comprenant au moins 90 % en poids, de préférence au moins 95 % en poids, mieux encore au moins 98 % en poids de la composition de polypropylène (PC) selon l'une quelconque des revendications précédentes.

13. Article extrudé ou moulé selon la revendication 12, ayant une teneur en phase bêta centrale (K_{β}), déterminée par diffusion de rayons X grand angle (WAXS), dans la plage de 50 à 99 %, de préférence dans la plage de 55 à 95 %, mieux encore dans la plage de 60 à 90 %.

14. Utilisation d'un acide dicarboxylique selon la formule (I) (CHA) et d'un sel de calcium d'un acide gras entièrement saturé (CaFA) pour améliorer la résistance au choc Charpy sur éprouvette entaillée d'une composition de polypropylène obtenue par mélange d'un polymère de propylène avec 0,10 à 1,00 % en poids de l'acide dicarboxylique selon la formule (I) (CHA) et 0,10 à 1,00 % en poids du sel de calcium d'un acide gras entièrement saturé (CaFA), dans laquelle la résistance au choc Charpy sur éprouvette entaillée de la composition de polypropylène est dans la plage de 250 à 2 000 %, de préférence de 400 à 1 500 %, mieux encore de 500 à 1 000 % supérieure à la résistance au choc Charpy sur éprouvette entaillée d'une composition de polypropylène équivalente sans ni l'un ni l'autre de l'acide dicarboxylique selon la formule (I) (CHA) ou du sel de calcium d'un acide gras entièrement saturé (CaFA), dans laquelle la résistance au choc Charpy sur éprouvette entaillée est déterminée à +23 °C selon l'ISO 179/1eA à l'aide de barres d'essai de 80x10x4 mm³ moulées par injection conformément à l'ISO 19069-2.

15. Utilisation selon la revendication 14, dans laquelle la composition de polypropylène est une composition de polypropylène (PC) selon l'une des revendications 1 à 12.
